# EUROPÄISCHE PATENTSCHRIFT

(11) **EP 2 762 827 B1**
(45) Veröffentlichungstag und Bekanntmachung des Hinweises auf die Patenterteilung: **14.03.2018**
(21) Anmeldenummer: 14000260.1
(22) Anmeldetag: 24.01.2014
(51) Int. Cl.: G01B 5/012

(54) **Tastkörper-Halteanordnung**
Probe holder assembly
Dispositif de support de corps de palpeur

(30) Priorität: 30.01.2013 DE 102013001561
(43) Veröffentlichungstag der Anmeldung: 06.08.2014
(73) Patentinhaber: JENOPTIK Industrial Metrology Germany GmbH, 78056 Villingen-Schwenningen (DE)
(72) Erfinder: Speck, Wolfgang, 78056 Villingen-Schwenningen (DE)
(74) Vertreter: Wagner, Carsten

(56) Entgegenhaltungen:
- EP-A1- 0 026 861
- EP-A1- 1 722 189
- JP-A- 2001 118 478
- US-A- 4 524 523
- US-B2- 7 155 839

## Beschreibung

Die Erfindung betrifft einen Messkopf für ein geometrisches oder dimensionelles Messgerät entsprechend der Definition des Anspruchs 1. Durch DE 39 22 296 A1 ist ein Messkopf bekannt, der einen Grundkörper aufweist, der einerseits mit dem Messgerät verbindbar oder verbunden ist und andererseits einen Tastkörper trägt. Der bekannte Messkopf weist ferner eine Überlastsicherung auf, die zum Schutz des Messkopfes und/oder des Messgerätes vor Beschädigung beim Auftreten einer auf den Tastkörper wirkenden Überlast auslöst. Bei dem aus der Druckschrift bekannten Messkopf ist die Überlastsicherung durch eine Magnetkupplung gebildet, die seitens des Messkopfes einen Permanentmagneten aufweist, über den der Tastkörper in Messposition an dem Messkopf gehalten ist. Überschreitet eine auf den Tastkörper oder auf eine den Tastkörper an dem Messkopf haltende Haltanordnung wirkende Kraft einen Maximalwert und tritt damit eine Überlast ein, so wird die Haltekraft des Permanentmagneten überwunden, so dass sich der Tastkörper bzw. seine Halteanordnung, beispielsweise ein Tastarm, von dem Messkopf löst. Die Magnetkraft des Permanentmagneten ist so bemessen, dass die im normalen Messbetrieb auftretenden Kräfte, die auf den Tastkörper bzw. die Halteanordnung wirken, nicht zu einem Auslösen der Überlastsicherung führen. Beim Auftreten einer Überlast wird zwar der aktuelle Messvorgang unterbrochen, gleichzeitig jedoch der Messkopf und das Messgerät vor Beschädigung geschützt, so dass zeit- und kostenaufwendige Reparaturen entfallen. Um das Messgerät wieder in Betrieb zu nehmen, ist es lediglich erforderlich, die Tastkörper-Halteanordnung mittels ihres Permanentmagneten wieder mit dem Messgerät zu verbinden.

Ähnliche mit Permanentmagneten arbeitende Überlastsicherungen von Messköpfen sind auch durch US 4,574,625, EP 1 589 317 B1, EP 0 406 781 B1, DE 33 20 127, EP 1 589 317 A1, DE 10 2007 018 444 B3, WO 02/27270 A1, DE 10 2005 036 928 B3, DE 196 17 023 C1, DE 196 17 023, US 5,028,901, EP 0 750 017 A2, DE 44 37 033 C2 und WO 03/083 407 sowie der nachveröffentlichten deutschen Patentanmeldung Nr. 10 2012 007 183.3 bekannt.

Durch DE 10 502 840 A1 ist ein Tastmessgerät bekannt, dessen Tastarm ein Soll-Bruchteil aufweist, das beim Auftreten einer Überlast bricht und so eine Überlastsicherung bildet. Messköpfe mit ähnlichen Überlastsicherungen sind auch durch DE 4 217 641 A1, US 5,394,757, EP 1 722 189 A1 und US 7,155,839 B2 bekannt.

Durch US 4,524,523 A ist ein Messkopf der betreffenden Art für ein geometrisches oder dimensionelles Messgerät bekannt, der einen Grundkörper aufweist, der einerseits mit dem Messgerät verbindbar oder verbunden ist und andererseits einen Tastkörper trägt. Der Messkopf weist eine Überlastsicherung auf, die zum Schutz des Messkopfes und/oder des Messgerätes vor Beschädigung beim Auftreten einer auf den Tastkörper wirkende Überlast auslöst, wobei die Überlastsicherung als irreversible Überlastsicherung ausgebildet ist. Bei dem bekannten Messkopf weist der Grundkörper an wenigstens einem Sicherungselement wenigstens eine Trennstelle auf, an der das Sicherungselement beim Auftreten einer überlast bricht, und wobei der Grundkörper eine Sicherungseinheit aufweist, die einen mit dem Tastkörper verbundenes oder verbindbares erstes Bauteil und ein mit dem Messkopf verbundenes oder verbindbares zweites Bauteil aufweist, wobei das erste Bauteil über das Sicherungselement mit dem zweiten Bauteil verbunden ist. Bei dem aus der Druckschrift bekannten Messkopf ist das Sicherungselement stabförmig ausgebildet und weist eine Querschnittsverengung auf, die eine Sollbruchstelle bildet.

Der Erfindung liegt die Aufgabe zugrunde, einen Messkopf anzugeben, der auch für einen Einsatz in Inprozess-Messanwendungen geeignet ist. Diese Aufgabe wird durch die im Anspruch 1 angegebene Erfindung gelöst. Vorteilhafte Weiterbildungen ergeben sich aus den abhängigen Ansprüchen. Die Erfindung löst sich von dem im Stand der Technik vorherrschenden Gedanken, die Überlastsicherung, die zum Schutz des Messkopfes bzw. des Messgerätes vor Beschädigung beim Auftreten einer auf die Tastkörper-Halteanordnung wirkenden Überlast auslöst, als reversible Überlastsicherung auszugestalten. Ihr liegt vielmehr der Gedanke zugrunde, die Überlastsicherung als irreversible Überlastsicherung auszubilden. Auf diese Weise ist weiterhin eine Überlastsicherung des Messkopfes bzw. des Messgerätes sichergestellt, gleichzeitig jedoch auf eine magnetische Ankopplung der Halteanordnung, beispielsweise eines Tastarmes, an den Messkopf verzichtet. Auf diese Weise ergibt sich gegenüber einer magnetischen Ankopplung an den Messkopf insbesondere in einer rauhen Messumgebung, beispielsweise im Rahmen einer Inprozess-Messanwendung, ein erheblicher Vorteil. Bei einer solchen magnetischen Ankopplung besteht die Gefahr, dass sich an der Trennstelle zwischen der Tastkörper-Halteanordnung, die auch kurz als Halteanordnung bezeichnet wird, und dem Messkopf Späne oder anderes metalisches Material anlagert, das dazu führt, dass die Ankopplung an den Messkopf nicht mehr mit der erforderlichen Präzision erfolgt und sich daraus Messfehler ergeben können. Außerdem besteht bei dem erfindungsgemäßen Messkopf nicht das Risiko, dass sich aufgrund der Anlagerung von Spänen oder dergleichen im Bereich der Ankopplung Betriebsstörungen ergeben. Die Trennstelle kann bei einer Ausführungsform der zuvor beschriebenen Art insbesondere so gewählt werden, dass gebrochene Sicherungselemente leicht und ohne großen Kostenaufwand ersetzt werden können. Die Erfindung sieht vor, dass der Grundkörper an wenigstens einem Sicherungselement wenigstens eine Trennstelle aufweist, an der das Sicherungselement beim Auftreten einer Überlast bricht. Tritt an der Tastkörper-Halteanordnung bzw. dem Tastkörper eine Überlast auf, so bricht das Sicherungselement, um eine Beschädigung des Messkopfes bzw. des Messgerätes zu verhindern. Der Messkopf wird durch Ersetzen des Sicherungselementes daran anschließend wieder in den Betriebszustand gebracht.

Erfindungsgemäß weist der Grundkörper eine Sicherungseinheit auf, die ein mit dem Tastkörper verbundenes erstes Bauteil und ein mit dem Messkopf verbundenes oder verbindbares zweites Bauteil aufweist, wobei das erste Bauteil über die Sicherungselemente mit dem zweiten Bauteil verbunden ist. Bei dieser Ausführungsform kann das erste Bauteil der Sicherungseinheit insbesondere lösbar mit dem Tastkörper verbunden sein, während das zweite Bauteil lösbar mit dem Messkopf verbunden sein kann, beispielsweise jeweils durch eine Schraubverbindung. Beim Auslösen der Überlastsicherung tritt ein Bruch zwischen dem ersten und dem zweiten Bauteil auf, wobei durch Brechen der Sicherungselemente das erste Bauteil von dem zweiten Bauteil getrennt werden kann. Um den Messkopf wieder in den Betriebszustand zu versetzen, können hierbei das erste und zweite Bauteil von dem Tastkörper bzw. dem Messkopf durch Lösen der Schraubverbindung gelöst werden. Um den Messkopf und damit das Messgerät wieder in den Betriebszustand zu versetzen, wird eine neue Sicherungseinheit verwendet, die dann wiederum mit dem Messkopf verbunden wird. Die Sicherungseinheit bildet damit ein Wegwerfteil, das nach dem Auslösen der Überlastsicherung entsorgt und durch eine neue Sicherungseinheit ersetzt wird.

Durch Verwendung von Sicherungselementen aus sprödbrüchigem Material ergibt sich damit der Vorteil, dass die Auslösung der Überlastsicherung im Gegensatz zu einer magnetischen Ankopplung bei einer klar definierten Kraft erfolgt.

Die Erfindung sieht vor, dass wenigstens zwei gleichartige und zueinander parallel oder annähernd parallel angeordnete Sicherungselemente vorgesehen sind.

Die Erfindung sieht ferner vor, dass die wenigstens zwei gleichartigen Sicherungselemente aus einem sprödbrüchigen Material bestehen. Bricht ein Sicherungselement beim Auftreten einer klar definierten Überlast, ist : es zuvor jedoch stabil, so dass unerwünschte Verschiebungen oder elastische Verformungen, die zu einer Verfälschung der Messergebnisse führen könnten, vermieden sind.

Unter einer irreversiblen Überlastsicherung im Sinne der Erfindung wird eine Überlastsicherung verstanden, nach deren Auslösen sich das Messgerät ohne Werkzeug oder Hilfsmittel nicht wieder in den Betriebszustand versetzen lässt, beispielsweise, indem gebrochene Sicherungselemente ersetzt werden. Demgegenüber wird unter einer reversiblen Überlastsicherung eine Überlastsicherung verstanden, nach deren Auslösen sich das Messgerät ohne Werkzeug bzw. Hilfsmittel wieder in den Betriebszustand versetzen lässt, beispielsweise durch Wiederansetzen einer magnetisch angekoppelten Tastkörper-Halteanordnung an das Messgerät.

Form, Größe und Anzahl der Sicherungselemente sind innerhalb weiter Grenzen wählbar. Insoweit sieht eine vorteilhafte Weiterbildung des erfindungsgemäßen Messkopfes vor, dass wenigstens ein Sicherungselement stabförmig oder annährend stabförmig ausgebildet ist. Die Erfindung sieht außerdem vor, dass die Längsachse der wenigstens zwei gleichartigen Sicherungselemente zur von dem Messgerät zu dem Tastkörper weisenden Längsachse des Grundkörpers der Tastkörper-Halteanordnung quer verläuft. Dadurch ergibt sich hinsichtlich des Auslösens der Überlastsicherung eine besonders günstige Auslösecharakteristik.

Zweckmäßigerweise verbindet das Sicherungselement bzw. verbinden die Sicherungselemente das erste Bauteil statisch bestimmt mit dem zweiten Bauteil, wie dies eine Weiterbildung der Erfindung vorsieht.

Um den Austausch der Sicherungseinheit nach dem Auslösen der Überlastsicherung besonders einfach, zeitsparend und damit kostengünstig zu gestalten, sieht eine vorteilhafte Weiterbildung vor, dass die Sicherungseinheit einerseits lösbar mit dem Tastkörper oder einem den Tastkörper tragenden Teil des Grundkörpers und andererseits lösbar mit dem Messgerät oder einem mit dem Messgerät verbindbaren Teil des Grundkörpers verbunden ist.

Ein erfindungsgemäßes Messgerät, das einen erfindungsgemäßen Messkopf nach einem der Ansprüche 1 bis 4 aufweist, ist im Anspruch 5 angegeben.

Die Erfindung wird nachfolgend anhand der beigefügten Zeichnung näher erläutert, in der stark schematisiert ein Ausführungsbeispiel eines erfindungsgemäßen Messkopfes dargestellt ist.

Es zeigt:
- Fig. 1: in einer schematischen Perspektivansicht ein Ausführungsbeispiel eines erfindungsgemäßen Messkopfes,
- Fig. 2: eine erste Seitenansicht des Messkopfes gemäß Figur 1,
- Fig. 3: eine weitere Seitenansicht des Messkopfes gemäß Figur 1,
- Fig. 4: eine Rückansicht des Messkopfes gemäß Figur 1.

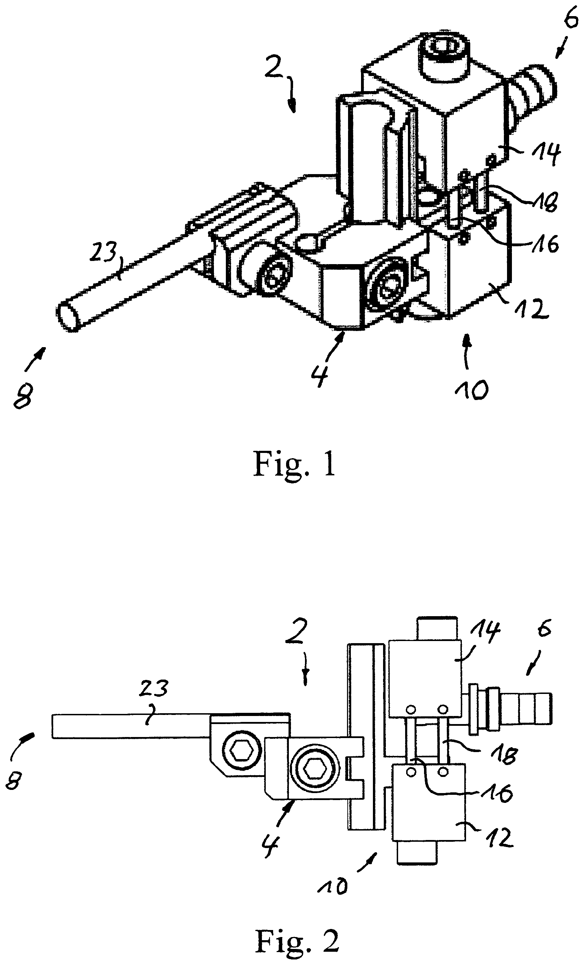

In Fig. 1 ist ein Ausführungsbeispiel eines erfindungsgemäßen Messkopfes 2 für ein Messgerät, insbesondere eines geometrischen oder dimensionellen Messgerätes dargestellt, der einen Grundkörper 4 aufweist, der im Betriebszustand des Messgerätes einerseits an seinem proximalen Ende 6 mit dem Messgerät verbunden ist und andererseits an seinem distalen Ende 8 einen Tastkörper trägt. Der Messkopf 2 weist eine Überlastsicherung auf, die zum Schutz des Messkopfes 2 bzw. des Messgerätes vor Beschädigung beim Auftreten einer auf den Tastkörper bzw. eine Halteanordnung des Tastkörpers wirkenden Überlast auslöst. Erfindungsgemäß ist die Überlastsicherung als irreversible Überlastsicherung ausgebildet.

Bei dem dargestellten Ausführungsbeispiel weist der Grundkörper 4 eine Sicherungseinheit 10 auf. Die Sicherungseinheit 10 weist ein im Betriebszustand des Messgerätes mit dem distalen Ende 8 des Messkopfes 2 und damit mit dem Tastkörper verbundenes erstes Bauteil 12 und ein im Betriebszustand des Messgerätes mit demselben verbundenes zweites Bauteil 14 auf. Das erste Bauteil 12 und das zweite Bauteil 14 sind bei diesem Ausführungsbeispiel blockartig ausgebildet und jeweils über eine Schraubverbindung mit dem proximalen Ende des Messkopfes 2 bzw. dem Messgerät verbunden.

Die Sicherungseinheit 10 weist ferner Sicherungselemente auf, über die das erste Bauteil 12 mit dem zweiten Bauteil 14 verbunden ist. Bei dem dargestellten Ausführungsbeispiel sind vier Sicherungselemente vorgesehen, die als dünne Stäbe ausgebildet sind und bei diesem Ausführungsbeispiel aus einem sprödbrüchigen Material, nämlich Keramik, bestehen.

In Fig. 1 sind lediglich zwei Sicherungselemente zu erkennen und mit den Bezugszeichen 16, 18 versehen. Aus Fig. 1 ist nicht ersichtlich und deshalb wird hier erläutert, dass zusätzlich zu den Sicherungselementen 16, 18 noch zwei weitere Sicherungselemente 20, 22 vorgesehen sind. Sämtliche Sicherungselemente sind gleichartig ausgebildet, bestehen also aus einem sprödbrüchigen Material und sind stabförmig ausgebildet. Aus Fig. 1 ist nicht ersichtlich und deshalb wird hier erläutert, dass die Sicherungselemente 16, 18 und die weiteren nicht erkennbaren Sicherungselemente 20, 22 von den Eckpunkten eines Vierecks ausgehen.

Figur 2 zeigt eine Seitenansicht der Halteanordnung 2, wobei die Sicherungselemente 16, 18 erkennbar sind.

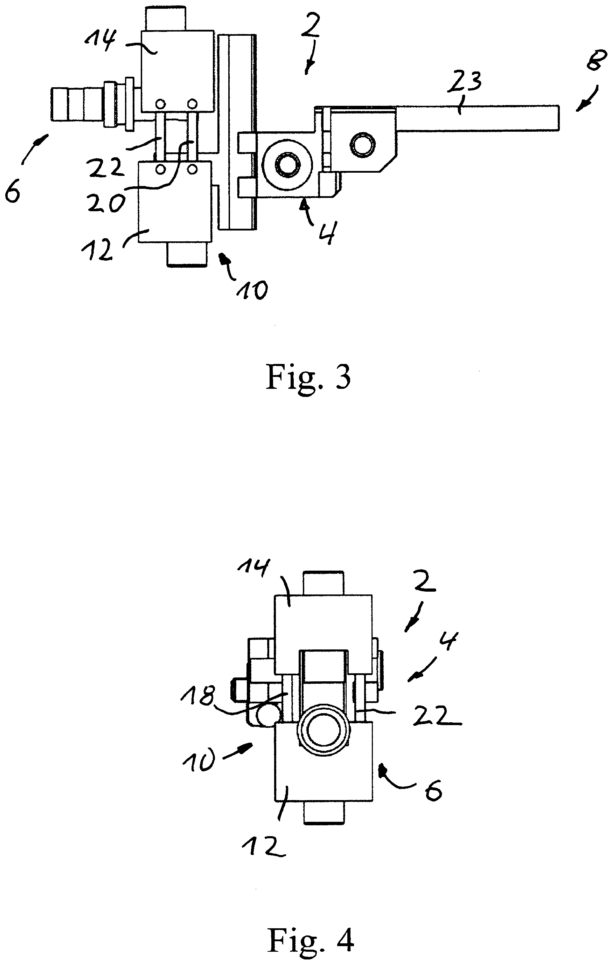

Figur 3 zeigt eine Seitenansicht der Halteanordnung 2 von der gegenüberliegenden Seite, wobei die weiteren Sicherungselemente 20, 22 erkennbar sind.

Figur 4 zeigt eine Ansicht des proximalen Endes 6 des Messkopfes 2.

Die Funktionsweise der erfindungsgemäßen Halteanordnung 2 ist wie folgt:

Beim Betrieb des Messgerätes wird mittels eines an dem distalen Ende 8 des Grundkörpers 4 angeordneten Tastkörpers eine Oberfläche abgetastet. Wirkt hierbei eine Überlast auf den Tastkörper und/oder die Tastkörper-Halteanordnung (Tastarm 23), so kommt es an den Sicherungselementen 16, 18 sowie den weiteren Sicherungselementen 20, 22 zu einem Sprödbruch, so dass die Sicherungselemente an ihrer vorgesehenen Trennstelle brechen. Dadurch löst sich das erste Bauteil 12 von dem zweiten Bauteil 14, so dass auf den Messkopf 2 wirkende Kräfte nicht auf das Messgerät übertragen werden. Das Messgerät und der Messkopf 2 sind damit vor Beschädigung geschützt.

Nach dem Auslösen der Überlastsicherung wird das erste Bauteil 12 von dem Messkopf 2 und das zweite Bauteil 14 von dem Messgerät durch Lösen der jeweiligen Schraubverbindung gelöst. Die Sicherungseinheit 10, die bei diesem Ausführungsbeispiel die irreversible Überlastsicherung bildet, wird dann entsorgt und durch eine neue Sicherungseinheit ersetzt, deren erstes Bauteil wiederum mit dem Messkopf 2 und deren zweites Bauteil mit dem Messgerät verbunden wird. Daran anschließend kann der Messbetrieb fortgesetzt werden.

Die Erfindung stellt damit eine irreversible Überlastsicherung für Messgeräte bereit, die einerseits einen Schutz des Messgerätes vor Beschädigung sicherstellt, es gleichzeitig jedoch ermöglicht, das Messgerät nach dem Auslösen der Überlastsicherung schnell wieder in Betrieb zu nehmen.

## Patentansprüche

1. Messkopf (2) für ein geometrisches oder dimensionelles Messgerät,
mit einem Grundkörper (4), der einerseits mit dem Messgerät verbindbar oder verbunden ist und andererseits an einer Tastkörper-Halteanordnung (23) einen Tastkörper trägt,
wobei der Grundkörper (4) eine als irreversible Überlastsicherung ausgebildete Sicherungseinheit (10) aufweist, wobei die Überlastsicherung zum Schutz des Messkopfes (2) und/oder des Messgerätes vor Beschädigung ausgebildet ist, um beim Auftreten einer auf den Tastkörper wirkenden Überlast auszulösen, wobei die Sicherungseinheit (10) ein mit der Tastkörper-Halteanordnung (23) verbundenes erstes Bauteil (12) und ein im Betriebszustand des Messgerätes mit demselben verbundenes zweites Bauteil (14) aufweist, wobei die Sicherungseinheit (10) wenigstens zwei gleichartige und
zueinander parallel oder annähernd parallel angeordnete Sicherungselemente (16, 18) aufweist, über die das erste Bauteil (12) mit dem zweiten Bauteil (14) verbunden ist,
wobei jedes der Sicherungselemente (16, 18) wenigstens teilweise aus einem sprödbrüchigen Material besteht, derart, dass der Grundkörper (4) an wenigstens einem Sicherungselement (16,18) wenigstens eine Trennstelle aufweist, an der das Sicherungselement (16, 18) beim Auftreten einer Überlast bricht, und
wobei die Längsachse jedes der Sicherungselemente (16, 18) zur von dem Messgerät zu dem Tastkörper weisenden Längsachse des Grundkörpers (4) der Tastkörper-Halteanordnung (2) quer verläuft.

2. Messkopf nach Anspruch 1, wobei wenigstens ein Sicherungselement (16, 18) stabförmig ausgebildet ist.

3. Messkopf nach Anspruch 1 oder 2, wobei das Sicherungselement oder die Sicherungselemente (16, 18) das erste Bauteil (12) statisch bestimmt mit dem zweiten Bauteil (14) verbindet bzw. verbinden.

4. Messkopf nach einem der vorhergehenden Ansprüche, wobei wenigstens ein Sicherungselement (16, 18) wenigstens teilweise aus Keramik besteht.

5. Geometrisches oder dimensionelles Messgerät, welches einen Messkopf nach einem der vorhergehenden Ansprüche aufweist.

## Claims

1. Measuring head (2) for a geometric or dimensional measuring device, comprising a base body (4), which is connectable or is connected on the one hand to the measuring device and on the other hand supports a probe body on a probe body holding arrangement (23), wherein the base body (4) comprises a fuse unit (10) in the form of an irreversible overload protection system, wherein the overload protection system is designed to protect the measuring head (2) and/or the measuring device from damage, to be triggered in the event of overload acting on the probe head, wherein the fuse unit (10) comprises a first component (12) connected to the probe body holding arrangement (23) and a second component (14) connected to the measuring device in the operating mode of the latter, wherein the fuse unit (10) comprises at least two similar fuse elements (16, 18) arranged in parallel or approximately in parallel, by means of which the first component (12) is connected to the second component (14), wherein each fuse element (16, 18) is made at least partly from a brittle material, such that the base body (4) has at least one separating point on at least one fuse element (16, 18), at which the fuse element (16, 18) breaks in the event of overload, and wherein the longitudinal axis of each of the fuse elements (16, 18) runs perpendicular to the longitudinal axis of the main body (4) of the probe body holding arrangement (2) oriented from the measuring device to the probe body.

2. Measuring head according to claim 1, wherein at least one fuse element (16, 18) is designed to be rod-shaped.

3. Measuring head according to claim 1 or 2, wherein the fuse element or the fuse elements (16, 18) connect(s) the first component (12) in a statically determinate manner to the second component (14).

4. Measuring head according to any of the preceding claims, wherein at least one fuse element (16, 18) is made at least partly from a ceramic material.

5. Geometric or dimensional measuring device, which comprises a measuring head according to any of the preceding claims.

## Revendications

1. Tête de mesure (2) pour un appareil de mesure géométrique ou dimensionnel, avec un corps de base (4), qui peut être relié ou est relié d'une part avec l'appareil de mesure et d'autre part supporte un corps de balayage sur un dispositif de maintien de corps de balayage (23),
le corps de base (4) comprenant une unité de protection (10) conçue sous la forme d'une protection anti-surcharge irréversible, la protection anti-surcharge étant conçue pour la protection de la tête de mesure (2) et/ou de l'appareil de mesure contre un endommagement afin, de déclencher, lors de l'apparition d'une surcharge agissant sur le corps de balayage, l'unité de protection (10) comprenant un premier composant (12) relié avec le dispositif de maintien du corps de balayage (23) et un deuxième composant (14) relié, dans l'état de fonctionnement de l'appareil de mesure, avec celui-ci, l'unité de protection (10) comprenant au moins deux éléments de protection (16, 18) de même type et disposés parallèlement ou presque parallèlement entre eux, qui permettent de relier le premier composant (12) avec le deuxième composant (14),
chacun des éléments de protection (16, 18) étant constitué au moins partiellement d'un matériau fragile, de façon à ce que le corps de base (4) comprenne, sur au moins un élément de protection (16, 18), au moins un endroit de séparation au niveau duquel l'élément de protection (16, 18) se rompt lors de l'apparition d'une surcharge et
l'axe longitudinal de chacun des éléments de protection (16, 18) s'étendant transversalement par rapport à l'axe longitudinal, orienté de l'appareil de mesure au corps de balayage, du corps de base (4) du dispositif de maintien du corps de balayage (2).

2. Tête de mesure selon la revendication 1, au moins un élément de protection (16, 18) étant conçu sous la forme d'une tige.

3. Tête de mesure selon la revendication 1 ou 2, l'élément de protection ou les éléments de protection (16, 18) reliant le premier composant (12) de manière statique avec le deuxième composant (14).

4. Tête de mesure selon l'une des revendications précédentes, au moins un élément de protection (16, 18) étant constitué au moins partiellement de céramique.

5. Appareil de mesure géométrique ou dimensionnel qui comprend une tête de mesure selon l'une des revendications précédentes.
